# EUROPEAN PATENT APPLICATION

(11) **EP 1 341 092 A1**
(43) Date of publication of application: **03.09.2003**
(21) Application number: 02290502.0
(22) Date of filing: 01.03.2002
(51) Int. Cl.: G06F 13/12, G06F 13/28

(54) **Method and arrangement for virtual direct memory access**

(71) Applicant: MOTOROLA, INC., Schaumburg, IL 60196 (US)
(72) Inventor: Casteres, Jean, 31000 Toulouse (FR); Risacher, Frederic, 31830 Plaisance du Touch (FR)
(74) Representative: Potts, Susan Patricia

(57) **Abstract**

A method and arrangement for virtual DMA in a wireless cellular telephone processing system (100) having first and second processors (120, 140), a plurality of modules (130, 150) and memory, the arrangement comprising: virtual DMA channel means (110) providing prioritized virtual DMA channels and providing interrupts from the virtual DMA channel means to the processor, the interrupts providing synchronisation of the virtual DMA channels; and callback function means (400) arranged to be called by the interrupts to provide interrupt service routines to perform synchronised virtual DMA accesses. This advantageously provides: a technique to separate the "action" or processing to be accomplished upon reception of an event into a function; a method to inform the system which action-function is to be called upon reception of such an event; a method to change the action-function while the system is in operation;
a technique to be hardware independent because a callback function attach/detach process (430/440) can apply to most existing exception hardware designs; and a method to revisit the synchronization scheme at the application level, because of the gain in time made to get to the application's action on an event.

## Description

### Field of the Invention

This invention relates to direct memory access (DMA) and particularly to DMA that may be performed in software.

### Background of the Invention

In the field of this invention it is known that, in systems having processor(s) and distributed modules, DMA is conventionally performed in hardware, via one or more DMA channels using an interrupt driven method, to allow system memory to be accessed directly by the modules without the need for processor intervention.

It is also known that, particularly in certain applications, it is desirable in DMA to minimise interrupt latency. For example, from US patent no. 5,644,784 there is known a method for minimising interrupt latency with a hardware and software apparatus, by using a base address for all interrupt service requests plus an offset which is derived from the priority of the interrupt received. After this is achieved, this patent suggests to use the interrupt priority numbers to allow for variable reserved memory space in order to hold the interrupt service routine (ISR). However, this has the disadvantage of restricting priority levels and is conditioned by the size of the "Interrupt Service Point" register.

It is also known that in systems employing DMA, care needs to be taken to ensure satisfactory handling of synchronization events generated by a DMA channel when performing DMA accesses.

A need therefore exists for an arrangement and method for virtual direct memory access (DMA) wherein the abovementioned disadvantage(s) may be alleviated.

### Statement of Invention

In accordance with a first aspect of the present invention there is provided a method for virtual direct memory access (DMA) as claimed in claim 1.

In accordance with a second aspect of the present invention there is provided an arrangement for virtual direct memory access (DMA) as claimed in claim 9.

Preferably the method and arrangement include means for attaching a callback function and the means for detaching a callback function, which means may be arranged to operate during use of the system, whereby functioning of the callback function means may be changed during use of the system.

There is thus provided a software algorithm and method to maximize the efficiency of the response time to virtual DMA events triggered while running an application on the "host" processors.

This advantageously provides:
- a technique to separate the "action" or processing to be accomplished upon reception of an event into a function;
- a method to inform the system which action-function is to be called upon reception of such an event;
- a method to change the action-function while the system is in operation;
- a technique to be hardware independent because a callback function attach/detach process can apply to most existing exception hardware designs;
- and a method to revisit the synchronization scheme at the application level, because of the gain in time made to get to the application's action on an event.

### Brief Description of the Drawings

One arrangement and method for direct memory access (DMA) channel synchronization incorporating the present invention will now be described, by way of example only, with reference to the accompanying drawing(s), in which:
FIG. 1 shows a block-schematic diagram illustrating a 'virtual' DMA scheme;
FIG. 2 shows a block-schematic diagram illustrating a generic call-back function mechanism that is employed in the DMA scheme of FIG. 1;
FIG. 3 shows a block-schematic diagram illustrating use of virtual DMA interrupts in the scheme of FIG. 1;
FIG. 4 shows a schematic diagram illustrating 'attach' and 'detach' functions for call-back Interrupt Service Routines used in the DMA scheme of FIG. 1;
FIG. 5 shows a block-schematic diagram illustrating hardware-software interaction in the scheme of FIG. 1;
FIG. 6 shows a schematic diagram illustrating 'auto-vectoring' with multiple device sources and OR-ed DMA channels which may be used in the DMA scheme of FIG. 1;
FIG. 7 shows a schematic diagram illustrating 'vectoring' with OR-ed DMA channels which may be used in the DMA scheme of FIG. 1;
FIG. 8 shows a schematic diagram illustrating 'vectoring' with virtual DMA channels and private interrupt lines which may be used in the DMA scheme of FIG. 1; and
FIG. 9 shows a schematic diagram illustrating the performance advantage of the DMA scheme of FIG. 1 in the context of polling.

### Description of Preferred Embodiment(s)

In modern digital mobile telephones, data to be transmitted or received over an air interface requires complex processing according to dedicated algorithms defined by standard committees such as the European Telecommunications Standards Institute (ETSI) for Global System for Mobile Communications (GSM) in Europe.

The steps of this digital signal processing are typically handled by a base-band processor integrated circuit (IC). This processor executes code that can be divided into two main classes of programs: "control and protocol" class on one hand, and "digital signal processing" class on the other hand.

Both classes have different characteristics. The "control and protocol" code does not execute often; it does not contribute to a high utilization of processor time, but occupies a significant amount of memory (contributing significantly to the program memory size). The digital signal processing class on the other hand, utilizes most of the time of the processor(s) but occupies very little of the available memory space as the code can often be optimised into tiny loops.

Inside the cellular equipment, the base-band IC contains the microprocessor(s) in charge of running both classes of programs. The emerging third generation of cellular equipment is forecast to handle more complex application programs, such as programs not related directly to the communication but to services that rely on the communication over the air interface (i.e., internet, reservation services, etc.). These applications need to coexist with the communication software layers.

Recent developments in base-band architecture have demonstrated that using a digital signal processor (DSP) to handle the signal processing class of software and a micro-controller unit (MCU) for the control and protocol class of software can be a very efficient way of designing a cellular system, although the communication between these two processors and their synchronization has been a difficult and tedious task to debug and achieve.

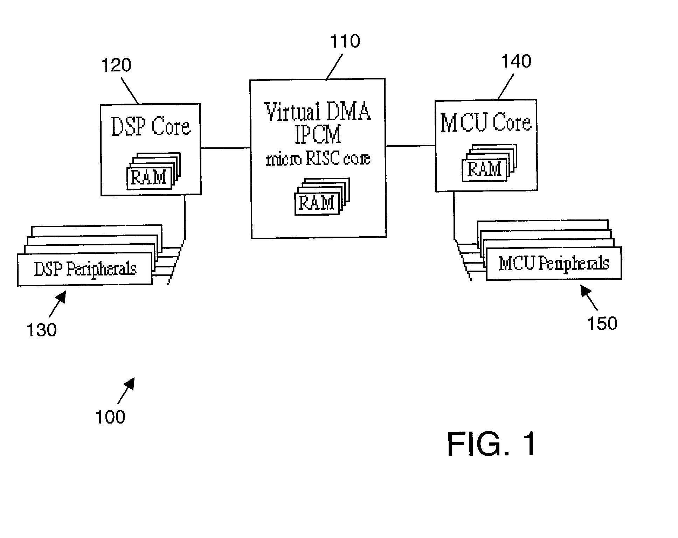

FIG. 1 shows a base-band architecture 100 for third generation wireless systems in which the present invention is used. It introduces an Inter-Processor Communication Module (IPCM) 110 which provides a micro-RISC processor architecture dedicated to handling virtual DMA channels between different elements or modules of the system such as DSP core 120 and associated DSP peripherals 130 and MCU core 140 and associated peripherals 150.

As will be described in more detail below, the present invention (in its preferred implementation considered here) is based on a software algorithm developed to solve virtual (i.e., carried out in software) DMA synchronization via virtual DMA channels. The software algorithm allows for application software running on the MCU core and/or the DSP to react to an event generated by the one of the IPCM virtual DMA channels in a minimum time (minimum number of cycles).

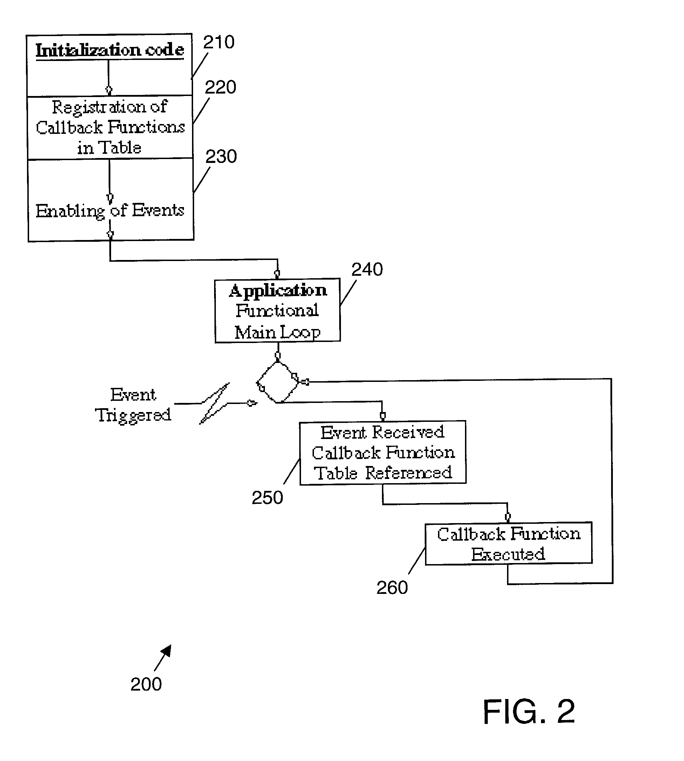

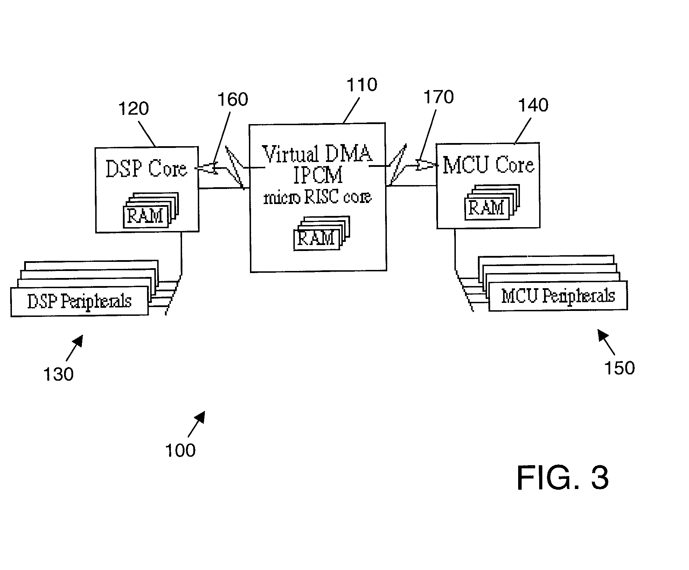

Referring now also to FIG. 2 and FIG. 3, the software algorithm utilises call-back functions to handle exceptions triggered by the virtual DMA channels.

The software algorithm may be considered as the result of combining three elements:
1. Virtual DMA channel engine (in the present example IPCM 110, but alternative virtual DMA channel engines may be used) with the capability to have prioritized virtual DMA channels,
2. Interrupt synchronisation of the virtual DMA channels, i.e., the capability of the MCU and DSP sides to receive interrupts from the virtual DMA engine as a means of synchronisation (this can result in a heterogenous interrupt handling methods on the MCU and DSP sides), and
3. A callback function mechanism used as ISR mechanism, which use solves the heterogenous interrupt handling methods mentioned immediately above.
The following description will detail each of the three elements making up the algorithm.

A call-back function mechanism is often used in graphical user interfaces (GUIs) to handle human interaction in a graphic environment (e.g., open-source 'X-Windows'). The call-back function is a function pointer that is attached to an event at initialization time; when the event occurs, the event handler calls the function, hence the name 'call-back function').

As shown in FIG. 2, in the present example the call-back function mechanism 200 is implemented by a set-up phase including (i) running of initialization code (step 210), followed by (ii) registration of call-back functions in a table (step 220), and (iii) enabling of events (step 230). The application main functional loop (step 240) may then be entered. When an event is triggered, the triggered event is received and the callback function is referenced (step 250) in the table set-up under step (ii) above. The callback function is then executed (step 260), and the mechanism then waits for a further event trigger.

When utilizing a Direct Memory Access (DMA) device, the DMA device informs its controlling processor that an event has occurred by sending it an interrupt. The processor reacts to the receipt of that event by calling an interrupt handler that performs prioritization and classification of the given interrupt (this is often done in hardware). In turn, the handler calls the Interrupt Service Routine (ISR), which is a routine in charge of taking action upon receipt of that particular interrupt event.

The DMA scheme of FIG. 1 implements the Interrupt Service Routine (ISR) with the call-back function mechanism, making them effectively call-back Interrupt Service Routines (Call-back ISRS) .

Action for virtual DMA events is implemented as follows. As shown in FIG. 3, exceptions (shown as 160 and 170) are generated to the DSP core 120 and/or to the MCU core 140 from the virtual DMA device IPCM 110.

The exception handler of each core is then called to handle the exception. The exception handler of the core then jumps to the call-back function's address. The action or processing to be executed upon such an exception is contained inside the call-back function.

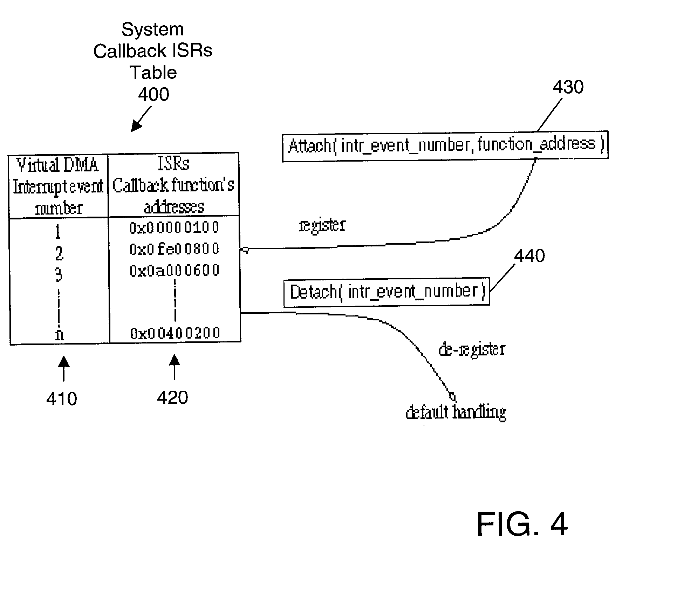

Referring now to FIG. 4, the initialization of the call-back function table 400 occurs at the 'bootstrap' stage of the core before enabling exceptions related to the virtual DMA device. The initialization bootstrap just fills up a table of function pointers 420 that define which function is to be called upon receipt of a particular interrupt event 410. When the table 400 is complete, the bootstrap terminates and control is given to the application program. The application program will eventually be interrupted; that interrupt event will be handled by the exception hardware (not shown) that will call the call-back Interrupt Service Routine mechanism.

Action to initialize, change and remove an action is implemented as follows. The act of the initialization code defining for the system the function's address to be called upon receipt of an interrupt event is called ATTACHMENT of the call-back-ISR. The ATTACH procedure is considered as an atomic action (430) to be provided by the system supporting library (not shown), and need not be described in further detail.

In the same manner, a DETACH atomic action is the act of de-registering the call-back function's address from the system call-back-ISR table. Similarly to the ATTACH atomic action, the DETACH atomic action (440) is also part of the system support library.

Simultaneous support for ATTACH and DETACH functions allow the system to also CHANGE the call-back ISR while up and running. System support for ATTACH/DETACH includes the enabling/disabling of interrupt events during the change of the call-back-ISR address in the table 400.

In order to maintain system integrity, a default interrupt service routine must be provided, that accounts for the time where no call-back ISR is provided or during the time where the application wants to change the existing call-back ISR. This default ISR can also be a user-provided call-back ISR.

It will be understood that the present invention is applicable in many hardware configurations. The latest third generation wireless cellular telephone architectures embed multiple different processor cores, each of which may have a different way to handle interrupts or, more generally, exceptions. The virtual DMA device 110 can therefore "talk" to two cores such as 120 and 140 that each have a different way to take interrupts into account. An interrupt priority determination scheme is provided in the core architecture (fast or normal interrupt), and the service provided by the interrupt controller allows the first level handler to determine the interrupt number. The algorithm is implemented purely in software, relying on the information provided by the interrupt controller and reacting as quickly as the hardware can establish priority and jump through the exception vector table.

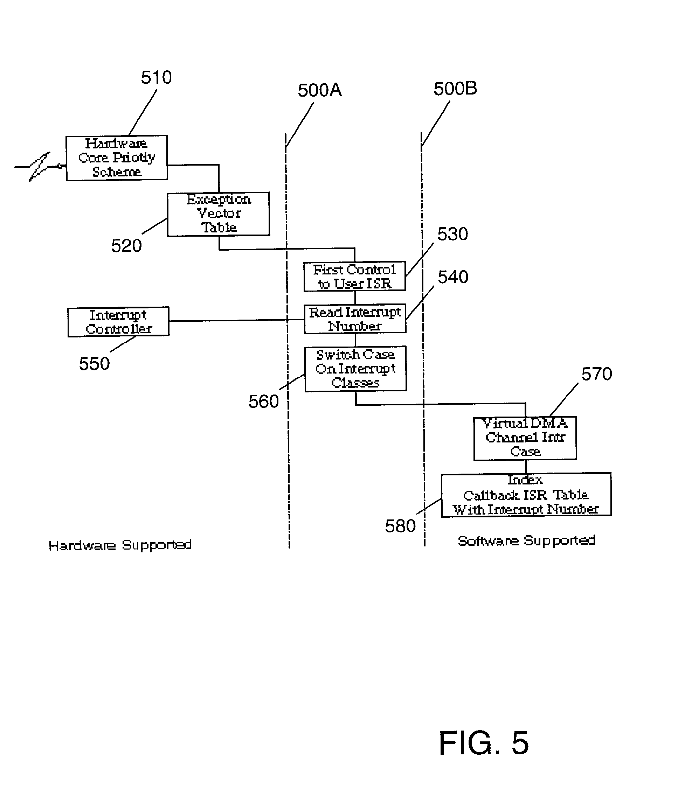

FIG. 5 illustrates the hardware/software interaction of the architecture 100. The frontier between functions supported in hardware and functions supported in software can vary, as shown by the dashed line which can be positioned at 500A or 500B. A hardware core priority scheme 510 has its output applied to an exception vector table 520, whose output is applied to a first control to user ISR 530. Reading 540 of the interrupt number is performed under control of interrupt controller 550. If necessary the case of the interrupt class may be switched 560. The virtual DMA channel interrupt case 570 is used as an index in the callback ISR table to the interrupt number 580. As can be seen, the functions 510, 520 and 550 are implemented in hardware, the functions 570 and 580 are performed in software, and the functions 530, 540 and 560 may be performed either in hardware or software.

The invention can then take advantage of the different methods, with the underlying hardware quickly configuring to the interrupt source. The dashed line 500A/500B shows the difference between the two levels of hardware support.

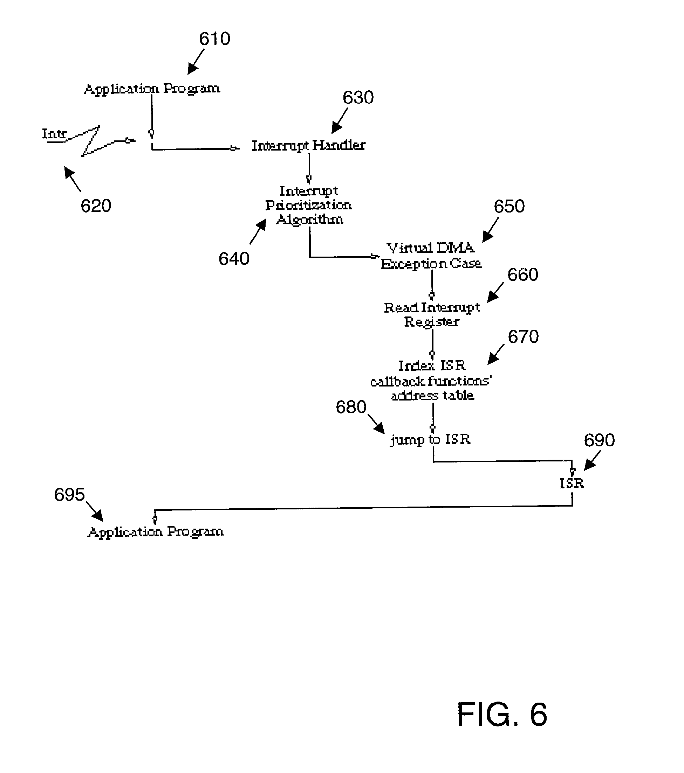

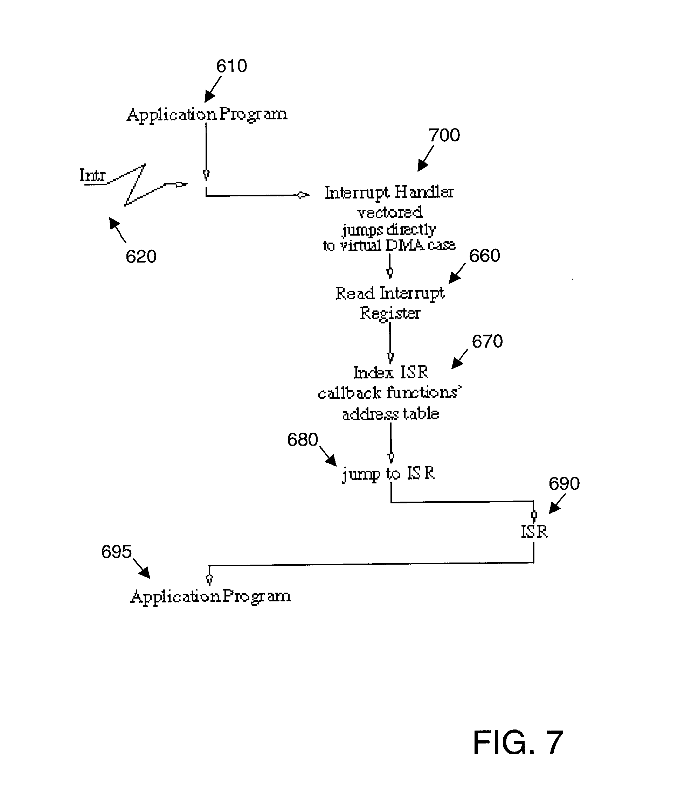

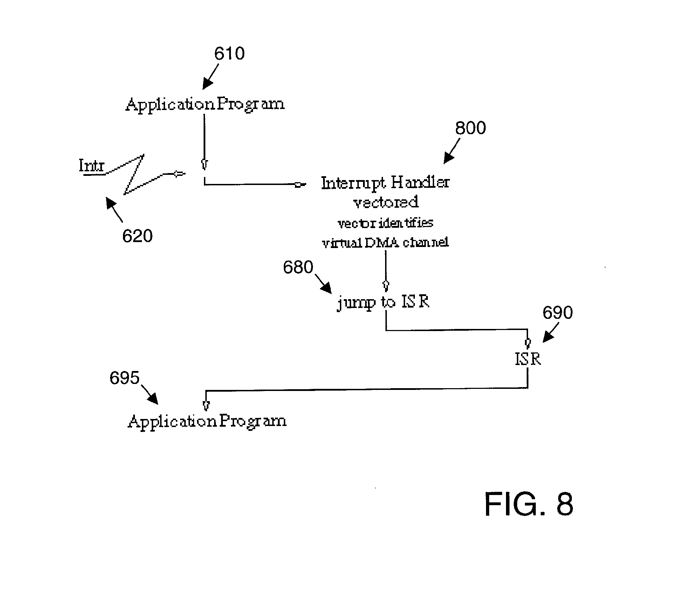

FIG. 6, FIG. 7 and FIG. 8 detail implementations of the architecture of 100 with different levels of hardware support: FIG. 6 illustrates use with autovectored interrupt, where the interrupt from the virtual DMA device is mixed with other devices and all virtual DMA channel interrupt events are OR-ed together; FIG. 7 illustrates use with vectored interrupts, which highlights the removal of the decision stage which determines the interrupt source's device; and FIG. 8 illustrates the case where all virtual DMA channels are connected directly to the processor's interrupt lines.

Referring now to FIG. 6, the steps followed for use with autovectored interrupt with multiple device sources and OR-ed channels are as follows:
- application running on the processing core (MCU or DSP) starts (step 610),
- interrupt event is triggered by the IPCM and received by the processing core (step 620),
- interrupt handler is called and starts executing (step 630),
- interrupt prioritization algorithm (step 640) determines it is a virtual DMA exception case that needs to be handled among all devices connected to the same interrupt line (step 650),
- the interrupt register of the IPCM is accessed to get the interrupt number, the number corresponding to the virtual DMA channel number on which the interrupt event occurred (step 660),
- the interrupt event number is used to index the call-back functions' table in order to get the address of the call-back function to be called - using the channel number as the index of the system's call-back ISR table allows to get to the jump sooner (step 670),
- the jump to the call-back function's address is performed giving control to the call-back Interrupt Service Routine (step 680),
- after ISR execution (step 690) control is returned to the application (step 695).

Referring now to FIG. 7, if hardware has support for vectored interrupts, source device determination (steps 640 and 650 of FIG. 6) is no longer necessary. In this event, instead of step 630 as in FIG. 6, the interrupt handler is vectored to jump directly to the appropriate virtual DMA case (step 700).

The ATTACH/DETACH routines maintain the call-back ISR functions table as in the case illustrated in FIG. 6.

Referring now to FIG. 8, if all the virtual DMA events can be wired to their respective private interrupt line and if the core supports vectored interrupts, the read access to the interrupt register of the virtual DMA device (steps 660 and 670 of FIG. 7) can also be removed. In this event, instead of step 700 of FIG. 7, the interrupt handler is vectored to identify the appropriate virtual DMA case (step 800).

The ATTACH routine at this point only needs to write the call-back ISR function's address in the interrupt vector table. This architecture choice is the fastest, but also may require too many interrupt lines as each virtual DMA channel requires its own interrupt line.

It will be appreciated that in the virtual DMA scheme described above, because a call-back function can be attached to an event, a synchronization mechanism is provided at the application level: as soon the interrupt is called the application effectively calls the action function.

Complex applications have a state machine representing their internal state. Events such as the virtual DMA events make the internal state change but the action is not yet taken, it is scheduled: the ISR merely records that the event occurred. The virtual DMA scheme described above can eliminate the synchronization which is otherwise needed: there is no need to update a state or transition in a state machine, the call-back ISR is the action itself (i.e., read a UART buffer and act on it) and because the lead time to get to the action is reduced, taking the action can be short enough for the application deadline to be met.

It will be understood that the virtual DMA scheme described above offers a number of advantages over prior techniques. In order to contrast the above virtual DMA scheme with other possible techniques, the case of a generic polling mechanism is considered in detail below. This case study highlights the area where the above virtual DMA scheme improves the time it takes to get to the correct ISR in regards of the event triggered. The hardware support can vary also, and therefore can have an impact on the algorithm developed.

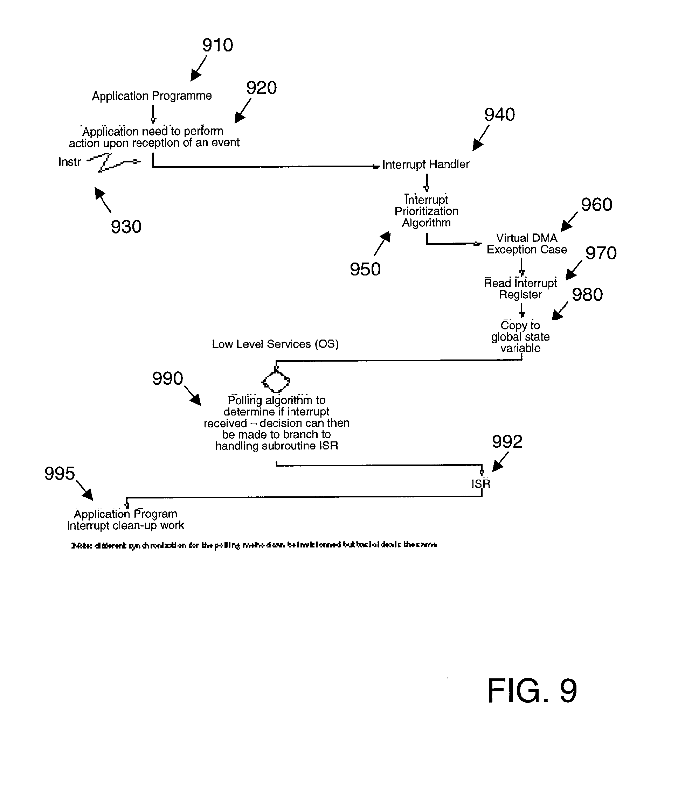

In the flow presented in FIG. 9, it was chosen to keep the time spent in the Interrupt Service Routine (ISR) to a minimum: the ISR only records which interrupt of the virtual DMA channels was sent. This means that it is up to the application to synchronize three key points:
1 detection or "receiving" of the interrupt,
2 handling or taking action on this interrupt event,
3 acknowledging the sending device that interrupt was detected and "understood".
This synchronization can be handled in various ways and is represented in the flow diagram of FIG. 9 by the two loops that symbolize when the application wants to wait on a particular event (top loop) or, when the application knows it must determine which interrupt was received and what action (ISR) should be called for that interrupt.

This technique is called polling because at some point the application will access a variable and/or a register to determine if the interrupt has yet arrived: it polls the variable.

As shown in FIG. 9, the steps are detailed as follows:
- application running on the processing core (MCU or DSP) starts (step 910),
- application needs to perform action upon receipt of an event (step 920)
- interrupt event is triggered by the IPCM and received by the processing core (step 930),
- interrupt handler is called and starts executing (step 940),
- interrupt prioritization algorithm determines it is a virtual DMA exception case that needs to be handled (steps 940 and 950),
- the interrupt register of the IPCM is accessed to get the interrupt number (the number corresponding to the virtual DMA channel number on which the interrupt event occurred - step 970),
- a copy is made into a statically allocated global state variable accessible by other parts of the program (step 980),
control is then returned to the application. Depending on the synchronization algorithm, it is at this point that the application can first detect that the event has occurred and take the decision to jump to the address of the proper Interrupt Service Routine (ISR) - it may be noted that the term "application" here can cover a user's operating system program in today's modern systems.

The polling scheme shown highlights the fact that it is up to the low level controlling loop, usually the operating system (OS) loop, to regain control and wait until receiving the exception (step 990), the ISR performs the action to be taken upon reception of this interrupt event (step 992), control is returned to the application, which probably performs clean-up (step 995).

Although this is by no means a universal example of polling mechanism, it shows the underlying idea under the polling mechanism which is that a program waits for a status bit to show up in a variable or register. Importantly, there are synchronization steps to take into account: detect, handle (take action), acknowledge. It may be noted that this example does not explain where the acknowledge of the interrupt should be placed:
- after the copy to the global variable, but then the action might never be executed, or
- at the end of the ISR but then the latency time is huge for the sender of the interrupt event, the IPCM.

The above polling example enables the advantage of the interrupt driven call-back function mechanism for the ISR to be highlighted:
- The action (ISR) to be performed is attached to the event at initialization time: there will be no time wasted by the application during its run to determine if and when the event should be handled (no detection overhead). This allows the operating system not to waste time waiting on an event, and have differently architectured tasks set.
- The acknowledge to the sender of the event can be performed with the minimum overhead inside the ISR, with knowledge that action is being taken and that no interrupt event has been dropped.
- Because no decision algorithm other than interrupt priority is involved, the control is returned to the application with the minimum overhead (jump to and return from). The ISR is narrowed down to only the action to be taken (or handling), which has a meaning for the application running at higher level.

It will be understood that the performance and cost gains of the virtual DMA scheme described above can be considered as follows. Since the virtual DMA scheme described above is a software algorithm for exception handling, it can be looked at from the performance and cost point of view. Performance is evaluated by the number of cycles that need to be spent by the system before control comes to the action upon the received event. The virtual DMA scheme described above proposes a highly efficient way to get to this point because the address of the function to jump to, that is the call-back ISR, is recorded in the call-back table at core initialization time. During application run time, the time is the minimum jump instruction that the hardware will need to perform.

Cost can be then evaluated as a consequence of the best performance achieved. The cost relates to the type of application running on an architecture such as that of FIG. 1: real-time digital signal processing oriented tasks. A gain in the number of cycles spent in exception handling enhances the ability of the entire system to react to an event. This enables the software architecture to better schedule and split its tasks, resulting in a cycle gain at the system level. This cycle gain results in a possibility to reduce the overall clock rate and/or go to a power saving mode more quickly, which in turn saves battery lifetime. Product performance characteristics visible to the consumer may therefore be increased.

In summary, therefore, it will be understood that the method for virtual DMA described above provides a quick response time from events, and provides synchronization between two or more processors.

## Claims

1. A method for virtual direct memory access (DMA) in a system having at least a first processor, a plurality of modules and memory, the method comprising:
providing virtual DMA channel means having prioritized virtual DMA channels;
providing interrupts from the virtual DMA channel means to the processor, the interrupts providing synchronisation of the virtual DMA channels; and
providing callback function means, the callback function means being called by the interrupts to provide interrupt service routines to perform virtual DMA accesses.

2. The method of claim 1, further comprising:
providing means for attaching a callback function to the callback function means; and
providing means for detaching a callback function from the callback function means.

3. The method of claim 2, wherein the means for attaching a callback function and the means for detaching a callback function are arranged to operate during use of the system, whereby functioning of the callback function means may be changed during use of the system.

4. The method of any preceding claim, wherein the interrupts are autovectored.

5. The method of any one of claims 1-3, wherein the interrupts are vectored.

6. The method of any one of claims 1-3, wherein the virtual DMA channels are connected directly to processor interrupt lines.

7. The method of any preceding claim, wherein the system further comprises a second processor, the first processor being a digital signal processor arranged to handle a signal processing class of software and the second processor being a micro-controller unit arranged to handle a control and protocol class of software.

8. The method of claim 7, wherein the system is a wireless cellular telephone processing system.

9. An arrangement for virtual direct memory access (DMA) in a system having at least a first processor, a plurality of modules and memory, the arrangement comprising:
virtual DMA channel means providing prioritized virtual DMA channels and providing interrupts from the virtual DMA channel means to the processor, the interrupts providing synchronisation of the virtual DMA channels; and
callback function means arranged to be called by the interrupts to provide interrupt service routines to perform virtual DMA.

10. The arrangement of claim 9, further comprising:
means for attaching a callback function to the callback function means; and
means for detaching a callback function from the callback function means.

11. The arrangement of claim 10, wherein the means for attaching a callback function and the means for detaching a callback function are arranged to operate during use of the system, whereby functioning of the callback function means may be changed during use of the system.

12. The arrangement of any one of claims 9-11, wherein the interrupts are autovectored.

13. The arrangement of any one of claims 9-11, wherein the interrupts are vectored.

14. The arrangement of any one of claims 9-11, wherein the virtual DMA channels are connected directly to processor interrupt lines.

15. The arrangement of any one of claims 9-11, wherein the system further comprises a second processor, the first processor being a digital signal processor arranged to handle a signal processing class of software and the second processor being a micro-controller unit arranged to handle a control and protocol class of software.

16. The arrangement of claim 15, wherein the system is a wireless cellular telephone processing system.
